# DEMANDE DE BREVET EUROPEEN

(11) **EP 0 935 245 A1**
(43) Date de publication de la demande: **11.08.1999**
(21) Numéro de dépôt: 99400233.5
(22) Date de dépôt: 03.02.1999
(51) Int. Cl.: G11B 17/04, G11B 33/02

(54) **Lecteur de disque optique compact**

(30) Priorité: 06.02.1998 FR 9801440
(71) Demandeur: Lansay France, 95100 Argenteuil (FR)
(72) Inventeur: Azoulai, Elie, 78110 Le Vesinet (FR)
(74) Mandataire: Laget, Jean-Loup

(57) **Abrégé**

Le lecteur comprend un plateau de réception de disque (2) associé à des moyens de déplacement en translation (17, 37, 44) entre une position d'éjection de disque et une position de lecture de disque, des moyens d'entraînement en rotation d'un disque compact en position de lecture, un dispositif à laser, et des moyens (15, 17) de commande de la lecture, de l'arrêt et de l'éjection du disque. Les moyens de commande comportent un organe de manoeuvre commun (15) fixé à un coulisseau (17) déplaçable entre une position de lecture, une position d'arrêt et une position d'éjection du disque, ledit coulisseau (17) étant relié audit plateau de réception (2) par lesdits moyens de déplacement en translation (17, 38, 44) de celui-ci.

## Description

L'invention concerne un lecteur de disque optique compact ou CD-ROM, du genre utilisé principalement pour écouter des enregistrements sur un tel disque.

On connaît des lecteurs de CD-ROM dans lesquels le lecteur proprement dit est un dispositif à laser disposé dans un châssis. Le disque optique est placé sur un plateau de réception qui peut être déplacé par translation entre une position d'éjection et de chargement dans laquelle il se trouve partiellement à l'extérieur du châssis, et une position de lecture du disque optique à l'intérieur du châssis. Le plateau est en général pourvu d'une large fente s'étendant du centre vers la périphérie du plateau pour déboucher vers l'intérieur du châssis.

Dans la position de lecture, le disque peut être entraîné en rotation à l'aide de moyens d'entraînement en rotation comprenant un moyeu supportant le disque et qui est alors placé au centre du plateau, à l'extrémité interne de la fente de celui-ci. Le moyeu est à son tour entraîné à l'aide d'un moteur électrique relié à un circuit d'alimentation. Dans cette position de lecture, la tête de lecture du dispositif à laser se trouve disposée en-dessous du disque et elle peut être déplacée radialement dans la fente pour lire le disque et pour effectuer des sauts de plage.

Les lecteurs comportent des moyens de commande de la lecture, de l'arrêt et de l'éjection du disque. Chaque fonction est commandée à l'aide d'un bouton de commande séparé, que se soit un bouton disposé directement sur l'appareil ou sur une télécommande.

Ces lecteurs de disques compacts font très souvent partie intégrante d'une chaîne hi-fi.

On connaît également d'autres lecteurs de disques compacts sous forme d'unités portables, généralement appelées baladeurs. Ces lecteurs ont la forme générale d'une huître et ils ne comportent pas de plateau de réception déplaçable en translation vers l'extérieur et par conséquent, ils sont dépourvus de moyens de commande de l'éjection du disque. Pour le chargement d'un disque compact, il suffit tout simplement de faire pivoter la partie supérieure du lecteur vers le haut pour pouvoir installer le disque sur le plateau de réception qui est donc immobile et qui constitue la face supérieure de l'autre moitié du lecteur.

L'invention a pour but de proposer un lecteur de disques compacts du genre comportant un plateau de réception mobile, mais qui soit plus adapté à être utilisé par un enfant ou une personne handicapée. Dans ce but, elle propose des moyens de commande de toutes les fonctions essentielles extrêmement simplifiés et fiables. En outre, les moyens de commande de ce lecteur sont très simple à fabriquer et à mettre en oeuvre, et par conséquent, ils sont peu onéreux. Ce nouveau lecteur peut, par ailleurs, avantageusement être réalisé sous forme d'une unité portable.

L'invention a pour objet un lecteur de disque optique compact comprenant dans un châssis un plateau de réception de disque associé à des moyens de déplacement en translation du plateau entre une position d'éjection de disque dans laquelle le plateau se trouve au moins partiellement à l'extérieur du châssis, et une position de lecture de disque à l'intérieur du châssis, des moyens d'entraînement en rotation d'un disque compact en position de lecture associés à un moteur électrique relié à un circuit d'alimentation, des moyens de lecture sous forme d'un dispositif à laser également relié au circuit d'alimentation, et des moyens de commande de la lecture, de l'arrêt et de l'éjection du disque, caractérisé en ce que lesdits moyens de commande comportent un organe de manoeuvre commun fixé à un coulisseau déplaçable entre une position de lecture, une position d'arrêt et une position d'éjection du disque, ledit coulisseau agissant sur un interrupteur inséré dans ledit circuit d'alimentation pour assurer l'alimentation du moteur et du dispositif à laser lorsque ledit organe de manoeuvre se trouve dans ladite position de lecture et pour couper l'alimentation lorsque l'organe de manoeuvre se trouve dans ladite position d'arrêt et dans ladite position d'éjection, et en ce que ledit coulisseau est relié audit plateau de réception par lesdits moyens de déplacement en translation de celui-ci.

Selon d'autres caractéristiques de l'invention :
- lesdits moyens de déplacement en translation du plateau de réception comportent un mécanisme à came actionné par le coulisseau lorsque celui-ci est déplacé de sa position d'arrêt dans sa position d'éjection ;
- le mécanisme à came comporte une première came en L effectuée sur le coulisseau et coopérant avec un premier doigt de guidage disposé d'un côté d'une première bielle ayant une extrémité articulée à un point fixe du châssis qui présente une deuxième came incurvée coopérant avec un deuxième doigt de guidage disposé de l'autre côté de ladite première bielle dont l'extrémité opposée est articulée à l'une des extrémités d'une deuxième bielle qui à son tour est articulée sur le plateau de réception ;
- le coulisseau porte une butée actionnant la fermeture de l'interrupteur du circuit d'alimentation lorsque le coulisseau est dans ladite position de lecture ;
- les moyens d'entraînement en rotation du disque compact sont disposés sur un berceau monté pivotant dans le châssis de manière à pouvoir être escamotés lorsque le plateau de réception est déplacé vers la position d'éjection ;
- le pivotement du berceau est effectué à l'aide de moyens de pivotement commandés par le coulisseau ;
- les moyens de pivotement du berceau comprennent un premier levier articulé au châssis et dont l'une des extrémités porte un doigt de guidage s'étendant parallèlement à l'axe d'articulation du levier et coopérant avec une came sur le coulisseau, cette came présentant deux parties formant un angle obtus l'une par rapport à l'autre, l'autre extrémité du premier levier étant pourvue d'un doigt de commande s'étendant dans le prolongement du levier et coopérant avec l'une des extrémités d'un deuxième levier articulé au châssis, l'autre extrémité du deuxième levier coopérant avec une tige reliée au berceau ;
- le coulisseau a une forme en équerre et il est monté coulissant sur un cadre fixé à l'intérieur du châssis et disposé autour du dispositif à laser et du plateau de réception ;
- l'une des ailes du coulisseau en équerre, qui est une aile supérieure, est guidée dans une glissière, alors que l'autre aile, qui est une aile latérale, est pourvue de deux fentes de guidage parallèles s'étendant parallèlement au fond 1' du châssis et dont chacune reçoit un doigt cylindrique de guidage fixé au cadre ;
- la position d'arrêt est une position intermédiaire entre la position de lecture et la position d'éjection ;
- le lecteur constitue une unité portable et le circuit d'alimentation comporte une source d'énergie autonome.

L'invention sera maintenant décrite à l'aide d'un exemple de réalisation non limitatif, en référence aux dessins annexés sur lesquels :
- la figure 1 est une vue en perspective du mécanisme de commande selon l'invention.
- la figure 2 est une vue schématique de dessus montrant le lecteur en position de lecture ;
- la figure 3 est une vue schématique de dessus montrant le lecteur en position d'arrêt;
- la figure 4 est une vue schématique de dessus montrant le lecteur en position d'éjection;

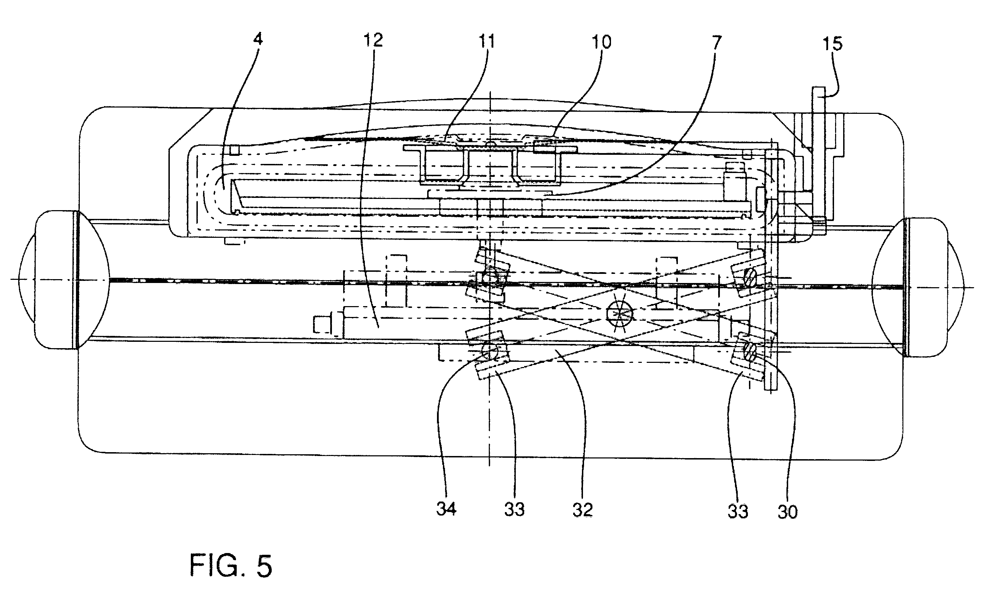

- la figure 5 est une vue schématique d'extrémité montrant les moyens de commande en position de lecture et d'arrêt ;
- la figure 6 est une vue schématique de côté montrant le lecteur en position de lecture ;
- la figure 7 est une vue schématique de côté montrant le lecteur en position d'arrêt ;
- la figure 8 est une vue schématique de côté montrant le lecteur en position d'éjection;
- les figures 9 et 10 représentent deux bielles commandant le déplacement du plateau de réception de disque ;
- la figure 11 est une vue de dessus du coulisseau de commande suivant l'invention ;
- la figure 12 est une vue latérale du coulisseau de commande suivant l'invention ;
- les figures 13 et 14 sont des vues dans le plan de deux bras de commande du berceau supportant le moyeu d'entraînement du disque;

Dans l'exemple décrit en référence aux figures, le lecteur de disque optique compact est constitué par une unité portable comportant un châssis 1 dans lequel sont logés tous les éléments permettant la lecture et la reproduction du son enregistré sur un disque compact. Etant donné que les moyens de lecture et de reproduction du son sont bien connus dans ce domaine technique, ils ne seront pas décrits ici en détail. L'invention se rapporte en effet aux moyens de commande de la lecture, de l'arrêt et de l'éjection qui selon l'invention sont essentiellement mécaniques.

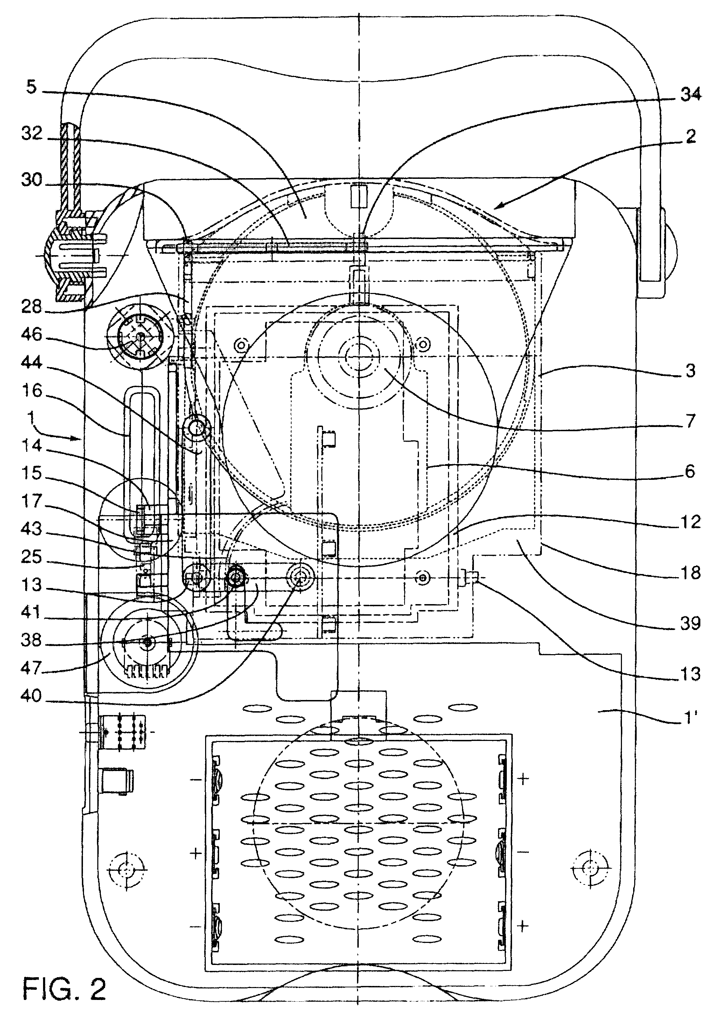

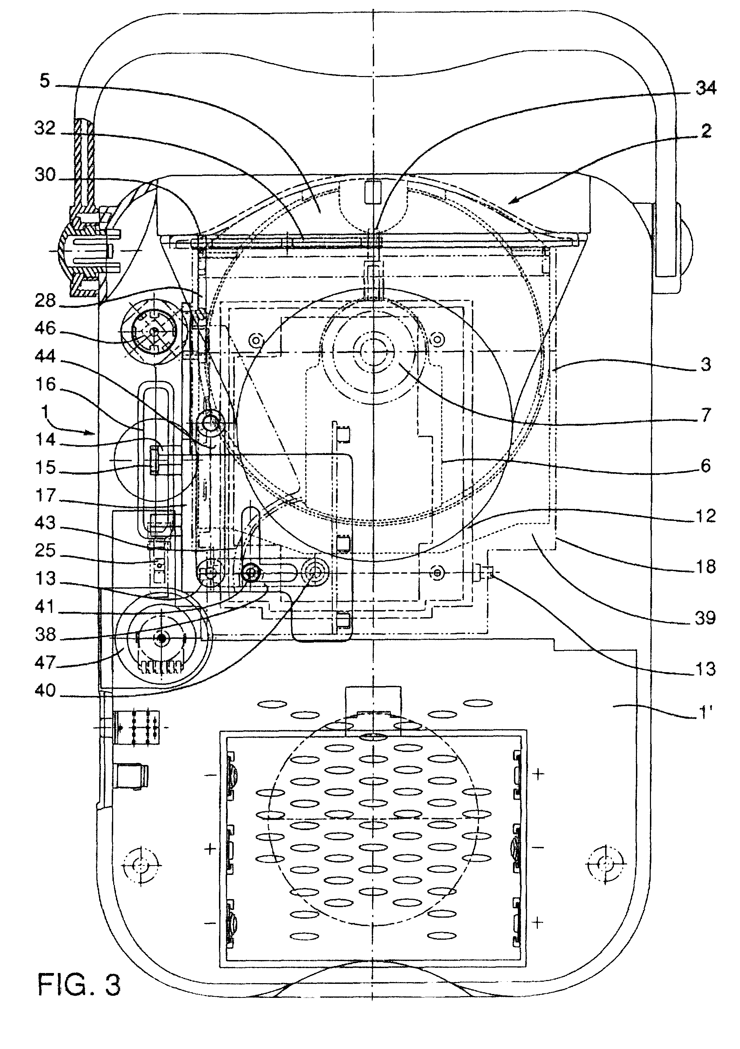

Le châssis contient un plateau de réception de disque 2 déplaçable par translation dans des glissières 3, entre une position d'éjection et de chargement de disque dans laquelle ce plateau sort partiellement par une ouverture allongée 4 à l'une des extrémités du châssis 1 (figure 2), et une position de lecture à l'intérieur du châssis (figure 3). Le plateau est dans ce but associé à des moyens de déplacement en translation qui seront décrits plus en détail ci-dessous.

Le plateau de réception 2 comporte un enfoncement circulaire 5 formant siège pour un disque compact. Dans cet enfoncement circulaire est effectuée une large fente radiale 6 s'étendant dans l'axe longitudinal du châssis, à partir du centre de l'enfoncement et débouchant à la périphérie du plateau, vers l'intérieur du châssis.

La fente 6 est destinée à recevoir, lors de la lecture du disque, des moyens d'entraînement en rotation du disque compact sous forme d'un moyeu 7 relié à un moteur électrique d'entraînement (non représenté sur les figures). Lors de la lecture, une partie centrale du moyeu, qui a une forme tronconique, s'étend à travers le trou central du disque compact qui se trouve en appui contre une partie périphérique annulaire du moyeu en vue de son entraînement en rotation.

Le moteur électrique est à son tour relié à un circuit d'alimentation dont la source d'énergie électrique dans l'exemple illustré est constituée par une source autonome sous forme de piles électriques 8. Bien entendu, le lecteur est avantageusement en outre pourvu, de manière classique en soi, d'une prise permettant son branchement au réseau électrique par l'intermédiaire d'un adaptateur externe ou interne. A l'opposé du moyeu 7, le disque est maintenu en place sur la partie annulaire du moyeu à l'aide d'une plaque 10 globalement annulaire sollicitée vers le bas par un ressort à lame 11.

Dans la position de lecture, une tête de lecture d'un dispositif de lecture à laser (non illustré sur les figures) se trouve en regard de la fente 6 du plateau de réception 2 et cette tête peut être déplacée radialement suivant la fente pour lire le disque compact et pour effectuer des sauts de plage.

Le moteur et le moyeu 7 sont portés par un berceau 12 monté pivotant sur deux axes alignés 13 de pivotement reliés au châssis dans le sens transversal de celui-ci. Grâce à ce pivotement, le moyeu peut être retiré du trou central du disque compact et escamoté avant le déplacement du plateau de réception 2 vers l'extérieur en vue de l'éjection du disque, et de nouveau relevé dans le trou de disque après le déplacement du plateau de réception dans le sens opposé pour placer le disque dans sa position de lecture. Les moyens de commande de ce mouvement de pivotement seront décrits plus en détail ci-dessous.

Comme tous les lecteurs de ce genre, le lecteur illustré sur les figures est pourvu de moyens de commande de la lecture, de l'arrêt et de l'éjection du disque. Selon l'invention, ces moyens de commande comportent un organe de manoeuvre commun 14 sous forme d'une poignée à l'extérieur du châssis. La tige 15 de la poignée 14 est guidée dans une fente 16 du châssis 1 et elle est en-dessous de celui-ci fixée à un coulisseau 17 monté coulissant sur un cadre 18 fixé au châssis et disposé autour du berceau 12, du dispositif à laser et du plateau de réception 2.

Le coulisseau 17 a la forme d'une plaque en équerre. L'extrémité d'une des ailes, qui est une aile supérieure 17', est guidé dans une glissière 19, alors que l'autre aile, qui est une aile latérale 17", est pourvue de deux fentes de guidage parallèles 20, 21 s'étendant parallèlement au fond 1' du châssis et dont chacune reçoit un doigt cylindrique de guidage 22 fixé au cadre 18 et qui à son extrémité libre est munie d'une rondelle de blocage 23.

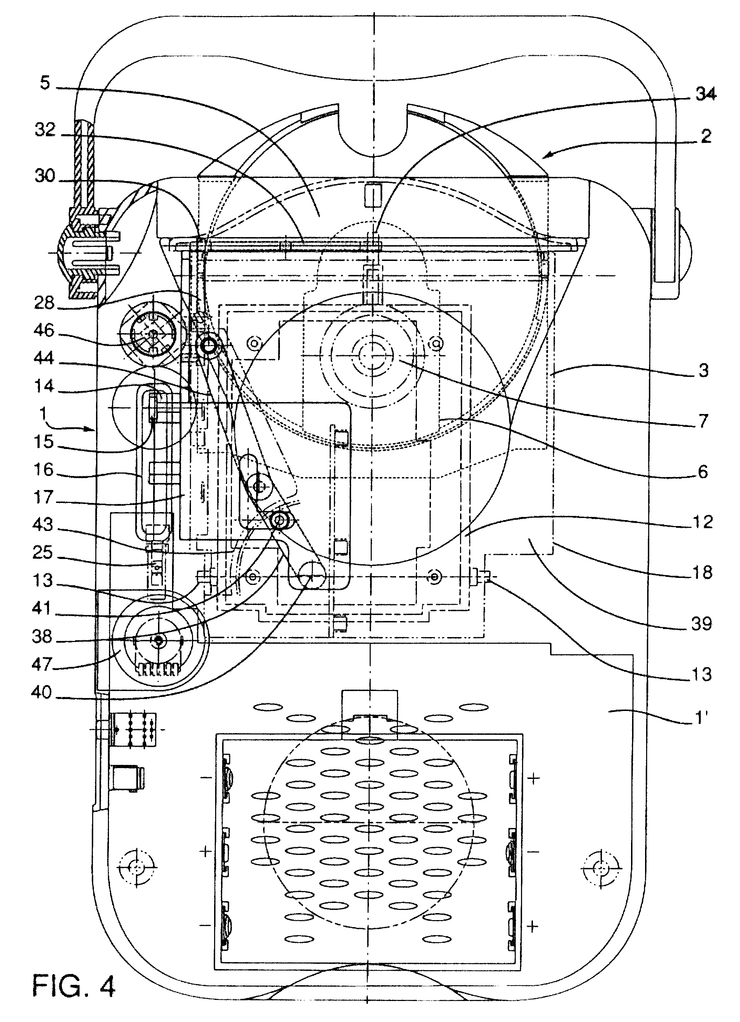

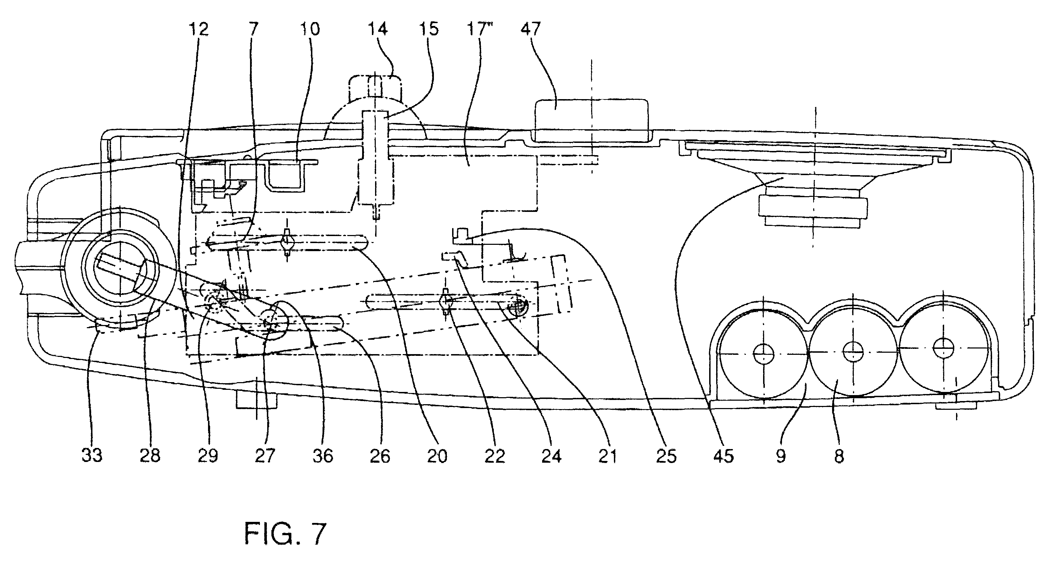

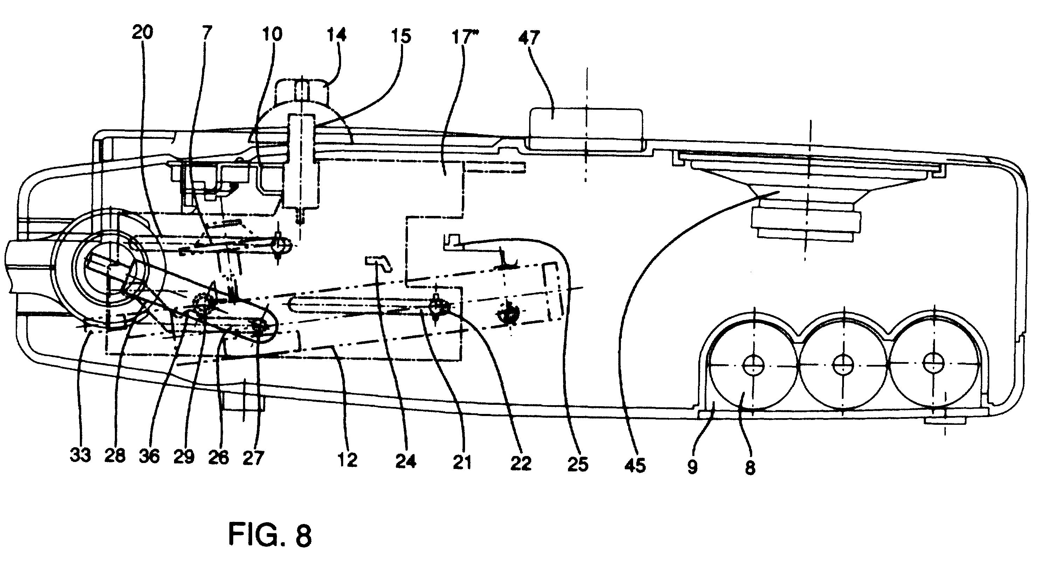

L'organe de manoeuvre 14 peut être déplacé le long de la fente 16 du châssis 1 pour prendre trois positions différentes, à savoir une position de lecture (figures 2, 6 et 14), une position d'arrêt (figures 3 et 7), et une position d'éjection (figures 4 et 8).

Pour commander la lecture, l'aile latérale 17" du coulisseau 17 comporte sur sa face externe une butée 24 qui, lorsque le coulisseau est dans la position de lecture, agit sur un micro-rupteur 25 relié au circuit d'alimentation du dispositif à laser et du moteur d'entraînement en rotation du moyeu. Cette position de lecture est par ailleurs avantageusement indiquée par une diode électroluminescente placée derrière une fenêtre dans la paroi du châssis.

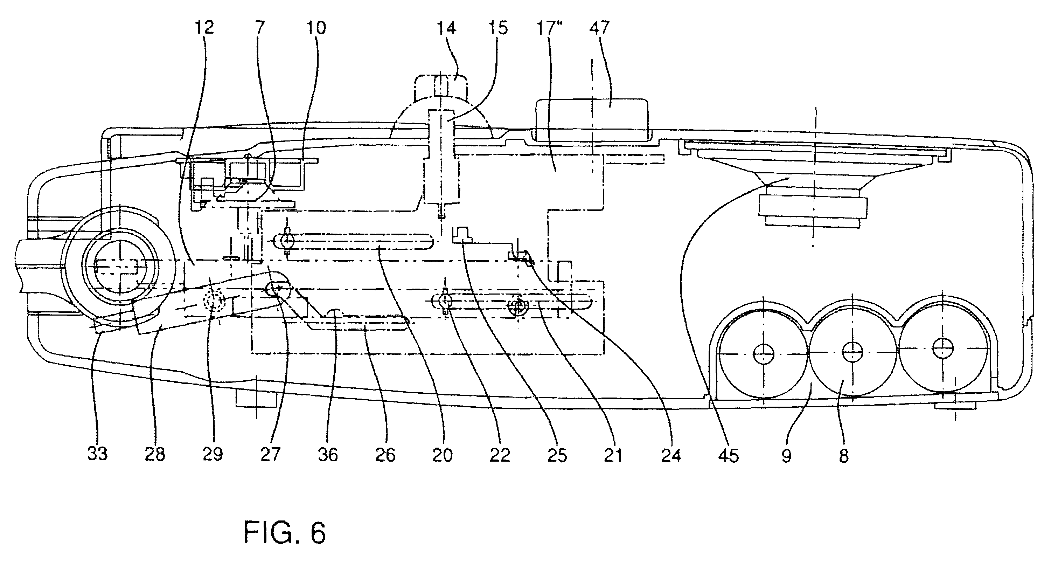

Pour commander l'arrêt, il suffit de d'amener l'organe de manoeuvre 14 vers la gauche sur les figures 6 à 8 afin de déplacer la butée 24 en dehors de son contact avec le micro-rupteur 25. Cette position d'arrêt est une position intermédiaire entre la position de lecture et la position d'éjection et, selon l'invention, le déplacement de l'organe de manoeuvre vers la position d'arrêt commande également le pivotement du berceau 12 vers le bas de manière à rétracter le moyeu hors du trou central du disque pour être prêt à l'éjection.

Pour commander le pivotement du berceau 12, l'aile latérale 17'' du coulisseau 17 est pourvue d'une fente formant came 26 qui sert au guidage d'un doigt de guidage 27 fixé sur un premier levier 28 (figure 6 à 8 et 14) et s'étendant parallèlement à l'axe d'articulation 29 de celui-ci sur une paroi latérale du cadre 18. Cette fente formant came 26 comporte une première partie inclinée vers le bas et formant un angle obtus avec une deuxième partie s'étendant parallèlement au fond 1' du châssis.

Le levier 28 comporte à son extrémité opposée un doigt de commande 30 s'étendant dans le prolongement du bras et faisant saillie hors du cadre 18 par une ouverture 31. Le levier 28 coopère par son doigt de commande 30 avec un deuxième levier 32 articulé sur une paroi latérale du cadre 18, perpendiculairement au levier 28. Le levier 32 comporte à ses extrémités des fourches 33 dont l'une reçoit le doigt de commande 30 du levier 28 et l'autre reçoit l'extrémité d'une tige 34 reliée au berceau 12 par une fente 35 ménagée dans la paroi du cadre 18.

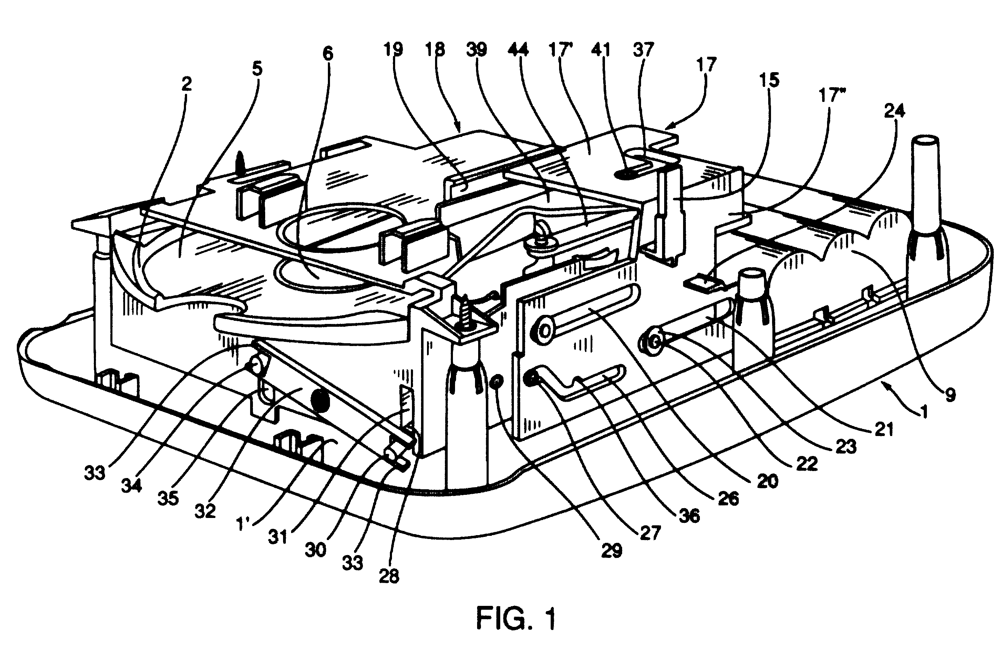

Dans la position de lecture montrée sur les figures 1, 2 et 6, le doigt de guidage 27 du premier levier 28 se trouve en haut à l'extrémité de la partie inclinée de la fente formant came 26 et le doigt de commande 30 de ce levier se trouve incliné vers le fond 1' du châssis. Par conséquent, l'extrémité correspondante du deuxième levier 32 est également inclinée vers le fond 1' et se trouve dans sa position basse, alors que son extrémité opposée, qui coopère avec la tige 34 du berceau 12, se trouve dans sa position haute dans laquelle le berceau est pivoté vers le haut de manière à s'étendre parallèlement au fond 1' du châssis.

A partir de cette position de lecture, l'organe de manoeuvre 14 peut être déplacé vers la position d'arrêt, qui est une position intermédiaire, ce qui entraîne le déplacement du doigt de guidage 27 vers le bas dans la partie inclinée de la fente formant came 27, jusqu'à cette position d'arrêt qui est indexée par un cran 36 au début de la partie de fente s'étendant parallèlement au fond 1'.

Dans cette position d'arrêt, le micro-rupteur 25 n'est plus, comme déjà mentionné, actionné par la butée 24 du coulisseau 17 et l'alimentation du dispositif à laser et du moteur d'entraînement en rotation du moyeu est coupée en même temps que le doigt de commande 30 du premier levier 28 est basculé vers le haut. Cela a pour conséquence que l'extrémité du deuxième levier en coopération avec la tige 34 du berceau 12 se trouve dans sa position basse après avoir fait pivoter le berceau vers le fond 1' du châssis pour escamoter le moyeu d'entraînement en rotation du disque en vue de l'éjection de celui-ci.

A partir de cette position d'arrêt, l'organe de manoeuvre 14 peut de nouveau être placé dans la position de lecture ou bien être déplacé vers la position d'éjection. Dans ce dernier cas, le doigt de guidage 27 du premier levier 28 suit la partie de la fente formant came 26 qui s'étend parallèlement au fond 1' du châssis et par conséquent, le premier levier reste immobile dans sa position.

Le déplacement de l'organe de manoeuvre 34 de la position d'arrêt vers la position d'éjection entraîne le déplacement en translation du plateau de réception de disque 2 vers l'extérieur. Ce mouvement est obtenu grâce à des moyens de déplacement en translation reliant le coulisseau 17 au plateau de réception 2. Ces moyens de déplacement en translation comportent un mécanisme à deux cames et deux bielles.

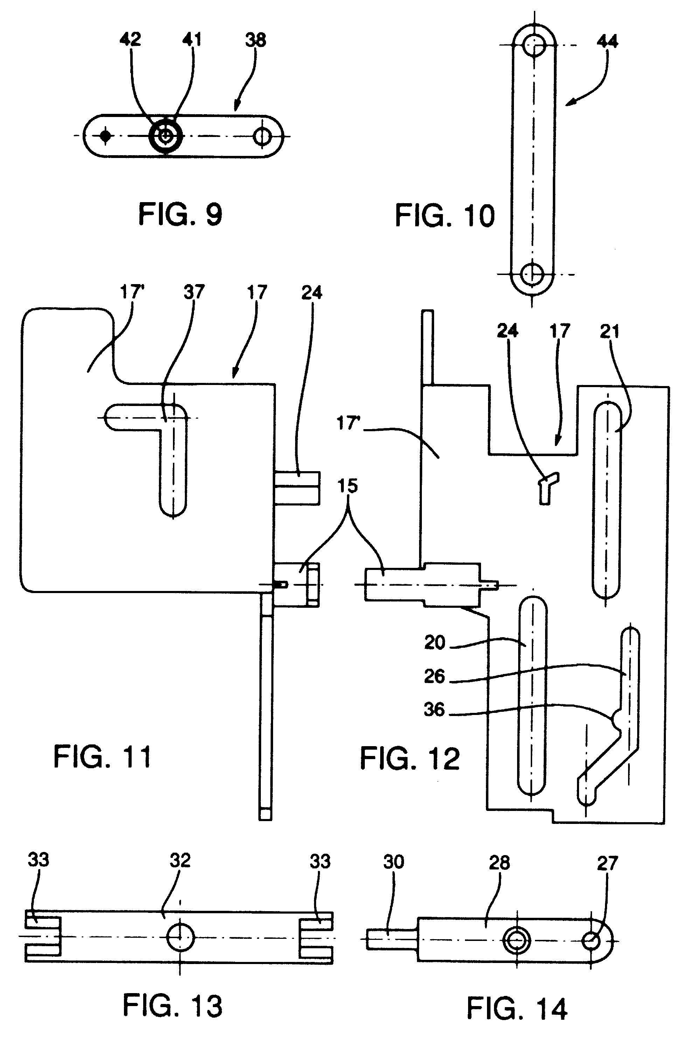

Une première came est constituée par une fente en L 37 effectuée dans l'aile supérieure 17' du coulisseau 17. L'une des branches de cette fente s'étend dans le sens longitudinal du châssis et l'autre dans le sens transversal de celui-ci. Une première bielle 38 (figure 9) est disposée entre l'aile supérieure 17' du coulisseau et une plaque supérieure de cadre 39 s'étendant parallèlement au fond 1' du châssis.

L'une des extrémités de cette première bielle 38 est articulée à un point fixe 40 sur cette partie supérieure de cadre 39. La bielle 38 est sur un de ses côtés pourvue d'un premier doigt de guidage 41 faisant saillie dans la fente 37 et est sur son côté opposé pourvue d'un deuxième doigt de guidage 42 disposé de manière concentrique par rapport au premier doigt de guidage 41.

Le deuxième doigt de guidage 42 coopère avec une deuxième came 43 constituée par une nervure incurvée (voir figure 2 à 4) disposée sur la plaque supérieure 39 du cadre 18.

L'extrémité opposée de la première bielle 38 est articulée à l'une des extrémités d'une deuxième bielle 44 (figure 10) s'étendant également entre l'aile supérieure 17' du coulisseau 17 et la plaque supérieure 39 du cadre 18. L'extrémité opposée de la deuxième bielle est articulée sur le plateau de réception 2 en vue du déplacement en translation de celui-ci. Ce déplacement du plateau est obtenu de la manière suivante.

Dans la figure 2, le lecteur est en position de lecture et les première et deuxième bielles 38, 44 sont sensiblement perpendiculaires l'une par rapport à l'autre. Dans cette position, le premier doigt de guidage 41 de la première bielle 38 se trouve à l'extrémité longitudinale de la fente formant came 37, alors que son deuxième doigt de guidage 42 se trouve à l'une des extrémités de la nervure formant came 43. Lorsque l'organe de manoeuvre 14, 15 est ensuite déplacé vers la position d'arrêt (voir figure 3), le mécanisme de déplacement en translation du plateau de réception 2 n'est pas encore actionné, puisque le premier doigt de guidage 41 est tout simplement déplacé le long de la branche longitudinale de la fente 37.

Cependant, lorsque l'organe de manoeuvre 14, 15 est déplacé de la position d'arrêt vers la position d'éjection (voir figure 4), le deuxième doigt de guidage 42 de la première bielle 38 suivra le contour de la nervure formant came 43 en même temps que le premier doigt de guidage 41 pénètre dans la branche transversale de la fente formant came 37 pour y être guidé jusqu'à l'extrémité de celle-ci. Les deux bielles 38 et 44 pivotent en même temps jusqu'à être pratiquement alignées l'une sur l'autre et lors de ce pivotement, l'extrémité de la deuxième bielle 44, qui est articulée sur le plateau de réception 2, va pousser celui-ci vers l'extérieur pour placer ce dernier dans sa position d'éjection.

Ensuite, il suffit de mettre un nouveau disque compact sur le plateau de réception 2 et d'effectuer le déplacement de l'organe de manoeuvre dans l'autre sens pour inverser les différents mouvements de manière à placer le disque dans la position de lecture et de déclencher la rotation du disque et la lecture de celui-ci à l'aide du dispositif à laser.

Dans l'exemple illustré sur les figures, il s'agit d'une unité portable qui est bien entendu pourvue de tous les moyens électroniques pour le traitement des signaux et d'autres moyens pour la reproduction du son tels qu'un haut-parleur 45 intégré dans le châssis.

De manière classique, le lecteur est également pourvu d'un bouton-poussoir de saut de plage 46 et d'une manette de réglage de volume 47.

Est ainsi obtenu un lecteur de disque compact extrêmement simple à manipuler puisqu'on y utilise un seul organe de manoeuvre, la poignée 14, pour actionner par l'intermédiaire d'une seule pièce, le coulisseau 17, l'ensemble des moyens de commande de la lecture, de l'arrêt et de l'éjection, mais aussi les moyens de pivotement du berceau portant les moyens d'entraînement du disque et le dispositif de lecture. Du fait que tous ces moyens, à l'exception du micro-rupteur 25, sont mécaniques, on obtient un lecteur extrêmement robuste qui présente une grande fiabilité de fonctionnement. Toutes les pièces mécaniques peuvent être fabriquées en matière plastique moulée, ce qui fait que le prix de revient du mécanisme de commande est particulièrement faible.

## Revendications

1. Lecteur de disque optique compact comprenant dans un châssis (1) un plateau de réception de disque (2) associé à des moyens de déplacement en translation (17, 37, 38, 43, 44) du plateau (2) entre une position d'éjection de disque dans laquelle le plateau se trouve au moins partiellement à l'extérieur du châssis (1), et une position de lecture de disque à l'intérieur du châssis, des moyens d'entraînement en rotation (7) d'un disque compact en position de lecture associés à un moteur électrique relié à un circuit d'alimentation, des moyens de lecture sous forme d'un dispositif à laser également relié au circuit d'alimentation, et des moyens (14, 15, 17) de commande de la lecture, de l'arrêt et de l'éjection du disque, caractérisé en ce que lesdits moyens de commande comportent un organe de manoeuvre commun (14, 15) fixé à un coulisseau (17) déplaçable entre une position de lecture, une position d'arrêt et une position d'éjection du disque, ledit coulisseau (17) agissant sur un interrupteur (25) inséré dans ledit circuit d'alimentation pour assurer l'alimentation du moteur et du dispositif à laser lorsque ledit organe de manoeuvre (14, 15) se trouve dans ladite position de lecture et pour couper l'alimentation lorsque l'organe de manoeuvre se trouve dans ladite position d'arrêt et dans ladite position d'éjection, et en ce que ledit coulisseau (17) est relié audit plateau de réception (2) par lesdits moyens de déplacement en translation (17, 38, 44) de celui-ci.

2. Lecteur selon la revendication 1, caractérisé en ce que lesdits moyens de déplacement en translation du plateau de réception (2) comportent un mécanisme à came (37, 38, 43, 44) actionné par le coulisseau (17) lorsque celui-ci est déplacé de sa position d'arrêt dans sa position d'éjection.

3. Lecteur selon la revendication 2, caractérisé en ce que le mécanisme à came (37, 38, 43, 44) comporte une première came en L (37) effectuée sur le coulisseau (17) et coopérant avec un premier doigt de guidage (41) disposé d'un côté d'une première bielle (38) ayant une extrémité articulée à un point fixe (40) du châssis (1) qui présente une deuxième came incurvée (43) coopérant avec un deuxième doigt de guidage (42) disposé de l'autre côté de ladite première bielle (38) dont l'extrémité opposée est articulée à l'une des extrémités d'une deuxième bielle (44) qui à son tour est articulée sur le plateau de réception (2).

4. Lecteur selon l'une quelconque des revendications précédentes, caractérisé en ce que le coulisseau (17) porte une butée (24) actionnant la fermeture de l'interrupteur (25) du circuit d'alimentation lorsque le coulisseau (17) est dans ladite position de lecture.

5. Lecteur selon l'une quelconque des revendications précédentes, caractérisé en ce que les moyens d'entraînement en rotation (7) du disque compact sont disposés sur un berceau (12) monté pivotant dans le châssis de manière à pouvoir être escamotés lorsque le plateau de réception (2) est déplacé vers la position d'éjection.

6. Lecteur selon la revendication 5, caractérisé en ce que le pivotement du berceau (12) est effectué à l'aide de moyens de pivotement (26, 28, 32, 34) commandés par le coulisseau (17).

7. Lecteur selon la revendication 6, caractérisé en ce que les moyens de pivotement du berceau (12) comprennent un premier levier (28) articulé au châssis et dont l'une des extrémités porte un doigt de guidage (27) s'étendant parallèlement à l'axe d'articulation du levier (28) et coopérant avec une came (26) sur le coulisseau (17), cette came (26) présentant deux parties formant un angle obtus l'une par rapport à l'autre, l'autre extrémité du premier levier (28) étant pourvu d'un doigt de commande (30) s'étendant dans le prolongement du levier et coopérant avec l'une des extrémités d'un deuxième levier (32) articulé au châssis, l'autre extrémité du deuxième levier coopérant avec une tige (34) reliée au berceau (12).

8. Lecteur suivant l'une quelconque des revendications précédentes, caractérisé en ce que le coulisseau (17) a une forme en équerre et en ce qu'il est monté coulissant sur un cadre (18) fixé à l'intérieur du châssis (1) et disposé autour du dispositif à laser et du plateau de réception (2).

9. Lecteur suivant la revendication 8, caractérisé en ce que l'une des ailes du coulisseau en équerre, qui est une aile supérieure (17'), est guidé dans une glissière (19), alors que l'autre aile, qui est une aile latérale (17''), est pourvue de deux fentes de guidage parallèles (20, 21) s'étendant parallèlement au fond 1' du châssis et dont chacune reçoit un doigt cylindrique de guidage (22) fixé au cadre (18).

10. Lecteur suivant l'une quelconque des revendications précédentes, caractérisé en ce que la position d'arrêt est une position intermédiaire entre la position de lecture et la position d'éjection (figures 2 à 4).

11. Lecteur suivant l'une quelconque des revendications précédentes, caractérisé en ce que le lecteur constitue une unité portable et que le circuit d'alimentation comporte une source d'énergie autonome (8).
